# EUROPEAN PATENT SPECIFICATION

(11) **EP 3 454 026 B1**
(45) Date of publication and mention of the grant of the patent: **17.03.2021**
(21) Application number: 17190612.6
(22) Date of filing: 12.09.2017
(51) Int. Cl.: G01K 1/10, G01K 7/04

(54) **SENSING ASSEMBLY WITH HIGH RESISTANCE TO AGGRESSIVE MEDIA**
MESSANORDNUNG MIT HOHER BESTÄNDIGKEIT GEGEN AGGRESSIVE MEDIEN
ENSEMBLE DE DÉTECTION À HAUTE RÉSISTANCE AUX MILIEUX AGRESSIFS

(43) Date of publication of application: 13.03.2019
(73) Proprietor: Endress+Hauser Wetzer GmbH+Co. KG, 87484 Nesselwang (DE)
(72) Inventor: LIANI, Andrea, 33030 Camino al Tagliamento (IT); PALMA, Luca, 20080 Zibido San Giaco (IT); PIETRONI, Michele, 20097 S.Donato (IT)
(74) Representative: Hahn, Christian

(56) References cited:
- EP-A1- 3 012 606
- WO-A1-99/62071
- WO-A1-2017/103469
- US-A- 5 277 496

## Description

The present invention is concerned with a sensing assembly for sensing a process variable of a medium, preferably for sensing a temperature, as well as with a method for fabricating such a sensing assembly. The sensing assembly is preferably a measuring device, e. g. a thermometer, and preferably used in hazardous environments.

A very critical issue for measuring devices in reactors for example in Oil & Gas or Chemical Industries is the contamination of the sensitive part or parts of measuring assemblies, e.g. the sensing element, by gases coming from the process. In order to protect the sensitive part/parts, the probes or sensors are usually built up by different layers of different materials. Typical classes of materials used are metals and ceramics. Especially at high temperature, aggressive process gases like chlorides, sulfides, e.g. hydrogen sulfide, hydrocarbons, oxides, e. g. sulfur oxides, but also oxygen and hydrogen, can cross the different protective layers and enter into the sensitive part/parts of the probe. For instance, ceramics often used in connection with such devices, e.g. as a thermal well or thermowell surrounding the sensing unit, can become porous at high temperature. As a consequence a diffusion and/or permeation of gases through the ceramic can occur and cause corrosion. This in turn can lead to a reduced measurement precision. In particular, a drifting of the measured values compared to those ascertained with a faultless device or even a full loss of the measurement signal can occur. That way, in case of thermometer probes with sensing units in the form of thermocouples, e.g. a thermocouple failure, e. g. a change of the electro motive force (EMF) of the thermocouple wires, is rather frequent under the severe conditions encountered e.g. in a reactor. In summary, it is crucial to further protect the sensitive part/parts of devices in such environments and in this concern to take care for specific requirements and possible origins of failure for different sensing units which may be used. For example, in industrial thermometers often used C-type thermocouples are very sensitive to oxygen so that it is necessary to realize corresponding measuring devices as to be able to scavenge them from oxygen.

For the built-up of a sensing assembly for use in hostile process environments, e.g. in a high temperature and/or high pressure environment, many requirements need to be taken into account. In particular, the variety of materials as well as the number of available joining techniques suitable for such environments is quite low. In case of temperature sensing assemblies e.g. mainly metals and ceramics are used for those components which face the external environment. While process connections of the sensing assembly for mounting it on a container are usually composed by a metal, e.g. a stainless steel, thermowells which surround the sensing elements are more often made by ceramics. The connection between the two is usually carried out by using cement.

To minimize damage of such sensing assemblies, different solutions have been suggested in the state of the art. EP 356593 A1 describes a temperature measuring device for which the thermocouple wires are enclosed in a gas-tight metal protection sheath which is inserted into a multi-segment refractory thermal well. An annular space formed between the sheath and the thermal well is continuously purged with a small quantity of a gas. Hence gasification products residing from the process are neutralized within the annular space by reaction with the purging gas.

To be independent from gas conduits used for purging gas supply, the European patent application EP02884250A1 introduces a stand-alone modular system for pressure compensation of the thermowell and protection of the temperature sensing assembly. The system comprises a gas container, which is filled with a limited amount of a, preferably inert, gas and which serves as a pressure reservoir for the thermowell. Furthermore, a pressure regulating element is connectable to the thermowell and to the container in a gas tight and pressure tight manner and serves for regulating the pressure in the thermowell to a predetermined pressure value.

Similar temperature sensing assemblies, in particular for use in process plants, have been disclosed in the European patent application EP02884251A1 and its divisional application EP03012606A1. The respective installations have in common that the measuring inserts can directly be replaced in the field without the need of shutting down the process. For this purpose, two interconnectable mounting parts with an inlet and outlet for a purging gas, which are embodied for receiving a measuring insert, are provided. The mounting parts have two chambers, a first chamber, for receiving an electrical connection, and a second chamber, for receiving a shaft portion of the measuring insert. When mechanically connected, the two chambers communicate via an opening between the two mounting parts, through which opening the shaft portion of the measuring insert is insertable. Thus, the entire thermometric device allows the use of a sensing element (insert) in harmful conditions avoiding the contact with polluting elements e.g. via a purging gas that flows through the insert itself.

In the following, reference is made to the entire content of the European patent applications EP 356593 A1, EP02884250A1, EP02884251A1 and EP03012606A1 Furthermore, an example of a probe that can be used to measure a parameter of a cooling liquid in a nuclear power plant can be found in WO 99/62071 A1.

However, by flowing of a purging gas through the thermowell, oxidation, corrosion and/or contamination of the sensing elements can only be reduced to a certain extent. Hence, damage of the sensing element can only be prevented for a limited amount of time.

An additional action for protecting a sensing assembly in a hostile environment has become known from the not yet published European patent application with the reference number 16191441.1. The sensing assembly described therein additionally comprises an adsorbing unit, which is at least partially comprised of a getter material, and at least partially positioned inside the protective tube. By means of the adsorbing unit, it is possible to maintain or even increase the purity of the purge gas over a large period of time. Thereby, both initial impurities present as well as impurities due to the process media are regarded. Accordingly, typical life times of a sensing assembly according to the present invention, are highly increased, e. g. up to several months. Reference is additionally made to this patent application in its entirety as well.

In principle, it is desirable to reduce the amount of aggressive gases which can permeate into an inner volume of the sensing assembly already in the first place. In other words, it is desirable to embody a sensing assembly such that diffusion of gases into the sensing assembly is minimized or hindered.

Hence, it is an object of the present invention to provide a sensing assembly featuring an increased life time when operated in a hostile environment.

This object is achieved by means of a sensing assembly according to claim 1 and by a method for fabricating such sensing assembly according to claim 9.

A sensing assembly for sensing a process variable of a medium, preferably for sensing a temperature according to the present invention comprises
- one measuring insert for sensing the process variable, preferably for sensing a temperature,
- one protective tube at least partially surrounding the measuring insert, which protective tube at least partially consists of a ceramic material and which protective tube is embodied to protect at least the measuring insert against at least one process condition, and
- a connecting sleeve, which connecting sleeve at least partially consists of a metallic material, and which connection sleeve is at least surrounding the protective tube in an area facing away from the medium.

The protective tube and the connecting sleeve are joint together at least in a predefined area by means of a braze produced via a brazing component arranged in the predefined area The protective tube is composed by alumina, silicon carbide or silicon nitride. The brazing component initially has the form of a solid body, namely a ring, composed by an active brazing alloy comprising titanium, copper and silver.

The protective tube is embodied to protect at least the measuring insert against at least one process condition, e.g. against pressure, or temperature, in particular high pressures or temperatures, or against friction or corrosion.

In the state of the art the protective tube and the connecting sleeve are joint together by means of cement. However, it turned out that such cement connections are comparably fragile in terms of their gas tightness. Aggressive gases thus tend to enter the inner volume of the sensing assembly in particular via the cement joint.

A braze is a metal joint which is achieved by melting and flowing a filler metal into the joint. In connection with the present invention the brazing component serves as filler metal. For brazing two components, the brazing component is arranged between the two components. By brazing of the two components a highly stable and gas- and liquid tight connection can be achieved which makes a sensing assembly according to the present invention much more robust compared to assemblies using other joining techniques, e.g. cementation.

In one embodiment the sensing assembly comprises at least one, preferably pre-formed, fitting at least partially surrounding the measuring insert, wherein the measuring insert and the pre-formed fitting are at least partially surrounded by the protective tube. Preferably, the fitting at least partially consists of a ceramic, preferably a refractory ceramic, or of another electrically insulating material. The fitting may have at least one opening or recess. The at least one opening or recess preferably serves for receiving the measuring insert. The opening or recess thus serves as a feedthrough for the measuring insert.

In another embodiment, the fitting and the measuring insert are positioned within an inner cavity of the protective tube such that at least one intermediate chamber is formed. At least the intermediate chamber can be purged by means of a purging gas via the gas-conduit means. For details about this embodiment it is referred to EP02884251A1.

In this context it is further preferred if the sensing assembly comprises gas conduit means including at least a gas-inlet and a gas-outlet both at least connected to the intermediate chamber. The gas conduit means especially serve, at least for a limited amount of time, for maintaining the pressure at least inside the intermediate chamber at a constant predetermined pressure value, which is higher than a threshold pressure value, e.g. of a process medium in a container, e.g. a reactor. The gas-inlet and gas-outlet can e. g. be valves or similar means for controlling a gas flow.

Many different types of the gas conduit means can be realized with respect to the present invention which all shall fall under its scope. Both open-loop systems, involving a gas line for purging gas supply, and closed-loop systems, like e. g. described in EP02884250A, are possible. One preferred embodiment involves that the measuring insert is replaceable without the need of shutting down the process. This means the sensing assembly, and in particular the gas conduit means, is/are embodied according to one of the embodiments of one of the European patent applications EP02884251A1 and/or EP03012606A1 to which reference was already made.

It is preferable, if the measuring insert has a rod like form in which at least one sensor element, preferably a temperature probe, e.g. a thermocouple or a resistance element, preferably comprising at least one connection cable or wire, is arranged, preferably at the tip of the measuring insert. However, multi-probe measuring inserts are also feasible, which contain more than one sensing element.

With regard to the measuring inset, it is also preferred, if the measuring insert has a metallic outer sheath, which is filled with an insulating material, and in which the sensor element, and preferably connection wires of the sensor element, are embedded.

It is of advantage, if the connecting sleeve comprises a process connection. This process connection may be attached to the sleeve, e.g. by means of a weld.

According to the present invention, the brazing component initially has the form of a solid body, namely ring, containing an active brazing alloy. The entire brazing component may be manufactured by the brazing alloy. By using a so called active brazing alloy no additional metallization of the ceramic protective tube. An active brazing alloy thus serves for automatic wetting According to the present invention, the brazing alloy comprises titanium, copper and silver. According to the present invention, the brazing alloy is an active alloy.

In another embodiment, the protective tube and/or the connecting sleeve are embodied to receive the brazing component. Preferably, at least the protective tube or the connecting sleeve features at least one seat or furrow for receiving the brazing component. It is also possible, that more than one brazing component is used and that the protective tube and connecting sleeve comprise more than one seat or furrow.

It may be important, that the dimensions of the protective tube and the connecting sleeve are properly fitted to each other. In this respect, on the one hand different thermal behavior, in particular regarding different thermal expansion coefficients, but also other properties of the different materials, i.e. a metal and a ceramic, need to be considered. On the other hand, it should be still ensured, that the components properly fit together when mounted, in particular gaps between the different components should not be too large.

The sensing assembly is preferably used for high temperature applications, preferably for sensing temperatures above 500°C. It is also preferably used in processes, where reactive gases, like e. g. oxygen, hydrogen sulfide or sulfur oxides are present.

It is an advantage of the present invention, that the sensing assembly can withstand hostile process conditions, e.g. with pressure differences up to 15 bar and up to process temperatures up to 1800°C.

The object of the present invention is further achieved by a method for fabricating a sensing assembly according to claim 9.

In a preferred embodiment of the method, the braze is produced under vacuum conditions, preferably at a pressure lower than 10⁻⁵ bar.

In another preferred embodiment of the method, for producing the braze, the protective tube, the connecting sleeve, and the brazing component are heated up to a melting point of the brazing alloy contained in the brazing component for more than one minute, preferably for a time interval from about 1-15 minutes. This ensures a homogenous formation of the braze and a complete wetting of the surfaces to be joint.

Finally, another preferred embodiment comprises that after producing the braze, the protective tube, the connecting sleeve, and the brazing component are cooled down for a first predetermined time interval under vacuum conditions, and subsequently for a second predetermined time interval in an inert gas atmosphere.

It is noted, that the embodiments described in relation to the sensing assembly are mutatis mutandis applicable for the method and the other way around that the embodiments described in relation to the method are mutatis mutandis applicable for the sensing assembly.

The invention will further be explained on the basis of the following figures. Without loss of generality, all embodiments shown relate to the particular case of a temperature measuring assembly with a temperature probe in the form of a thermocouple.
Fig. 1 shows a temperature measuring assembly with gas-conduit means as known in the state of the art,
Fig. 2 shows a detailed view of the connecting sleeve and protective tube which are connected via a cement,
Fig. 3 shows a detailed view of the connecting sleeve and protective tube which are connected via a braze, as suggested by the present invention, and
Fig. 4 shows a detailed view of a possible embodiment of the connecting sleeve and brazing component in the form of a ring.

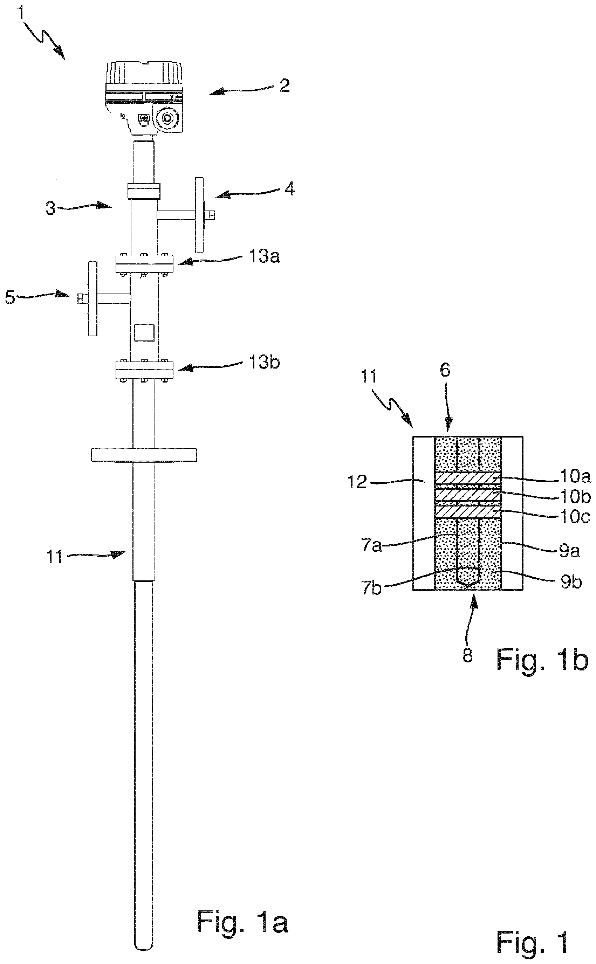

In Fig. 1 a a schematic drawing of a state of the art sensing assembly 1 for sensing temperature is shown, as it may be used in a process plant. In the upper part a terminal head 2 of the sensing assembly is arranged, in which e. g. electronics for e. g. power supply and/or signal processing and/or providing measurement values may be placed. The device 1 is equipped with gas conduit means 3 including a gas-inlet 4 and a gas-outlet 5, here, but not generally necessary, both in the form of a valve. It shall be assumed, that via the gas conduit means 3 of the present and following embodiments it is possible to maintain either a pressure at a constant predetermined pressure value above or below a certain threshold pressure value, e. g. of the process. For this purpose, the gas conduit means may be equipped with means for pumping at least the intermediate chamber in order to create a vacuum therein.

For simplicity, for the following a gas conduit means 3 as described in one of the applications EP02884251A or EP03012606A1 shall be assumed. However, it should be noted, that of course also other constructions of the gas conduit means 3 readily known for those skilled in the art are feasible and fall under the scope of the present invention.

The measuring insert 6 as shown in more detail in Fig. 1b is a thermocouple with two thermocouple wires 7a, 7b, which in turn are connected at a hot junction 8 at the tip of the measuring insert 6, at which position temperature is to be measured. The thermocouple wires 8a,8b are surrounded by a sheath 9a and further may be embedded in an insulation 9b. They are surrounded by an arrangement of multiple pre-formed fittings 10a-10c, which have the form of cylindrical blocks and are stacked upon each other.

The measuring insert 7 and the pre-formed fittings 10a-10c are positioned within an inner cavity of a protective tube 11 such, that an intermediate chamber 12 is formed for flowing of the purging gas. Continuous operation of the sensing assembly 1 in hostile environments, in particular for high temperatures, can cause serious damage of the measuring insert. In particular corrosion of the thermocouple wires as a consequence of chemically active gases entering the intermediate chamber 12 between the protective tube 11 and the measuring insert 6 frequently arises even in presence of a purging gas. This can for instance be due to the fact that the protective tube 11 may become partly porous at high temperatures, that sealing barriers, e.g. 13a, 13b, or joints between different components are not tight, or may also be caused by impurities of the purging gas itself.

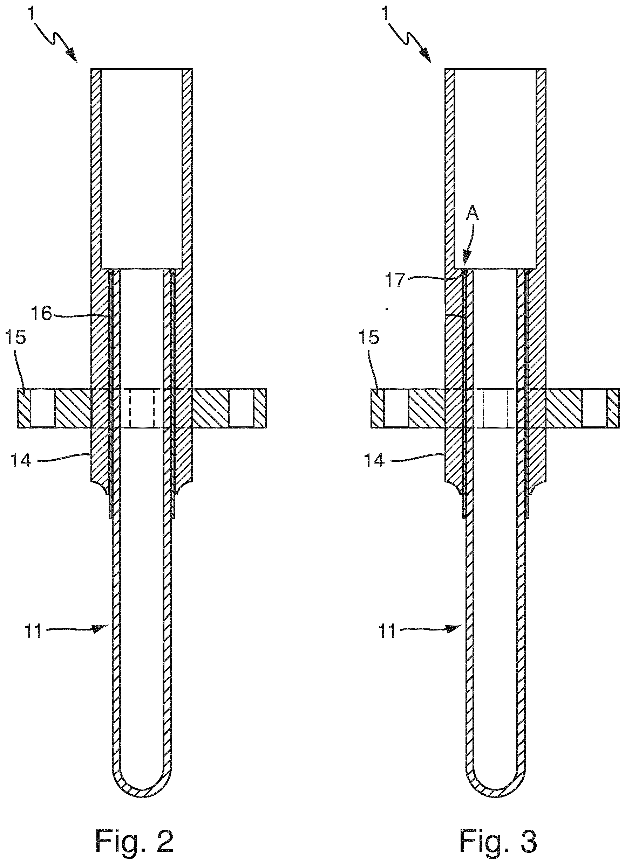

One source regarding possible damage of the sensing element is given by the joint between the protective tube 11 and the connecting sleeve 12 as shown in Fig. 2. Usually, the protective tube 11 is composed by a ceramic, e. g. alumina, silicon carbide or silicon nitride. At least in an area facing away from the medium it is surrounded by the connecting sleeve 14, which in turn is made by a metal. The process connection 15 for establishing a connection towards a container [not shown] is attached to the connecting sleeve 14. All connecting means known in the state of the art can be used, e.g. the process connection 15 can be welded on the connecting sleeve 14. Usually, process connections 15 are also made by a metal. Accordingly, it is of advantage, if the connecting sleeve 14 and the process connection 15 are made of the same material. In the example shown, the process connection 15 is given by a flange. However, other connecting means known in the state of the art are of course also feasible.

The connecting sleeve 14 is embodied such that its dimension fit to those of the protective tube 11, in particular with respect to its inner diameter. Thus, e.g. the inner diameter of the connecting sleeve 15 is matched to the outer diameter of the protective tube 11. Besides a proper fitting, different thermal behavior of the two components composed of different materials has to be taken into account. Mechanical stress on the protective tube 11 can thus be avoided.

The connection between the protective tube 11 and the connecting sleeve 15 is usually made by a cement 16 which is arranged between an inner surface of the connecting sleeve 14 and an outer surface of the protective tube 11. However, it turned out, that the cement joint 16 between the protective tube 11 and the connecting sleeve 14 is a critical issue with respect of the tightness of the assembly 1, in particular against aggressive gases.

In order to hinder aggressive gases from the process to enter the inner volume of the sensing assembly, e.g. the intermediate chamber 12 or at least to minimize the amount of gases that can enter the inner volume, the present invention suggests to establish the connection between the protective tube 11 and the connecting sleeve 14 by establishing a braze, as shown in Fig. 3. By means of a braze, a joint or junction between the connecting sleeve 15 and protective tube 11 with high temperature stability (up to approx. 180°C), and high mechanical stability can be achieved. Thereby, different thermal behavior of the two materials involved, i.e. a ceramic and a metal, can be taken into account.

For the purpose of the present invention, the sensing assembly 1 comprises a brazing component 17 arranged in a predefined area A between the protective tube 11 and the connecting sleeve 14. According to the present invention, the brazing component 17 initially has the form of a solid body, as in case of Fig. 3, where, the brazing component is embodied as a ring, as shown in detail in Fig. According to other examples not forming part of the present invention, the brazing component 17 can also have the form of a paste [not shown].

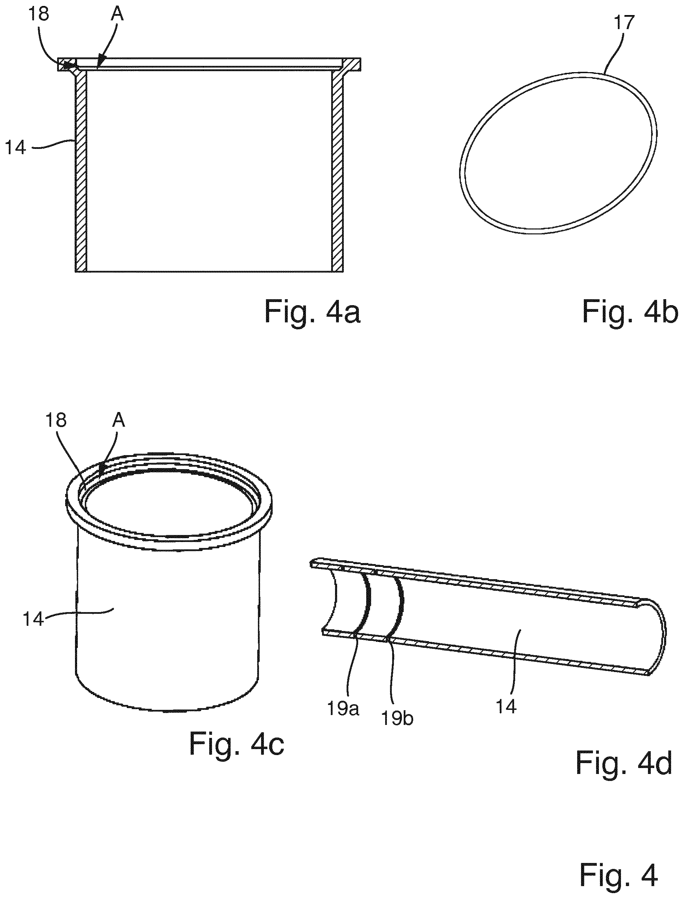

For arranging the brazing component 17 relative to the protective tube 11 and the connecting sleeve 14, the connecting sleeve is particularly embodied to receive the brazing component. In this manner, the connection between the protective tube 11 and the connecting sleeve 14 can be properly defined. In other embodiments, also the protective tube 11, or both may be embodied to receive the brazing component 17. As can be seen from Fig. 4a, for the exemplary embodiment described here, the connecting sleeve 14 features a seat 18 for receiving the brazing component 17. A perspective view of the connecting sleeve 14 with the seat 18 can be found again in Fig. 4c. It is also possible, that more than one brazing component 17 is used. Instead of a seat 18, the connecting sleeve 14 may also be equipped with a furrow 19 for receiving the brazing component 17. This is shown in Fig. 4d. Here, the connecting sleeve 14 even comprises two furrows 19a, 19b for receiving two brazing components 17. In other embodiments, more than two brazing components 17 may be utilized. Also, the connecting sleeve 14 may e.g. comprise one seat 18 and one furrow 19.

The brazing component 17 contains a brazing alloy or is composed by the brazing alloy. Preferably, an active brazing alloy is used. Advantageously, in this case no initial wetting of the protective tube is necessary. To establish the connection between the protective tube 11 and the connecting sleeve 14, the assembly is heated up to the melting point of the brazing alloy. At least the brazing component then flows into the gap between an inner surface of the connecting sleeve 14 and an outer surface of the protective tube 11.

The geometric dimensions of the connection can e.g. be tuned by choice of the overlapping area between the connecting sleeve 14 and protective tube 11.

To produce the braze, in a first step, at least the connecting sleeve 14, the brazing component 17 and the protective tube 11 are arranged such that the connecting sleeve 14 at least surrounds the protective tube 11 in an area facing away from the medium, and that the brazing component 17 is arranged between the connecting sleeve 14 and the protective tube 11. The three components are subsequently introduced into an oven, which can be kept under vacuum conditions, preferably at a pressure lower than 10⁻⁵ bar. After vacuumizing the oven, the annealing process is initiated. First, the oven is heated up to a predefined temperature well below the melting temperature of the brazing alloy for a predefined time interval. In this manner, the temperature distribution within an inner volume of the oven can be homogenized.

Then, the temperature is increased up to the melting temperature of the brazing alloy for a second predefined time interval. The second time interval is chosen such, that a homogeneous fusion or flowing of the brazing alloy into the joint or connection can be guaranteed. After the connection is established the oven is cooled down. In a first step the vacuum is kept to avoid contamination and/or oxidation. At a predetermined temperature, finally the oven is vented.

### List of reference characters

- 1: sensing assembly
- 2: terminal head
- 3: gas conduit means
- 4: gas-inlet
- 5: gas-outlet
- 6: measuring insert
- 7a,7b: thermocouple wires
- 8: hot junction
- 9: sheath with insulation
- 10a-10c: pre-formed fittings
- 11: protective tube
- 12: intermediate chamber
- 13a,13b: sealing barriers
- 14: connecting sleeve
- 15: process connection
- 16: cement joint
- 17: brazing component
- 18: seat
- 19: furrow
- A: predefined area

## Claims

1. Sensing assembly (1) for sensing a process variable of a medium, preferably for sensing a temperature, comprising
- one measuring insert (6) for sensing the process variable, preferably for sensing a temperature,
- one protective tube (11) at least partially surrounding the measuring insert (11), which protective tube (11) at least partially consists of a ceramic material and which protective tube (11) is embodied to protect at least the measuring insert (6) against at least one process condition, and
- a connecting sleeve (14), which connecting sleeve (14) at least partially consists of a metallic material, and which connection sleeve (14) is at least surrounding the protective tube (11) in an area facing away from the medium,
- wherein the protective tube (11) and the connecting sleeve (14) are joint together at least in a predefined area (A) by means of a braze produced via a brazing component (17) arranged in the predefined area (A),
**characterized in that**
- the protective tube (11) is composed by alumina, silicon carbide or silicon nitride, and
- the brazing component (17) initially has the form of a solid body, namely a ring, composed by an active brazing alloy comprising titanium, copper and silver.

2. Sensing assembly (1) as claimed in claim 1,
comprising at least one, preferably pre-formed, fitting (13a, 13b) at least partially surrounding the measuring insert (6), wherein the measuring insert (6) and the pre-formed fitting (13a,13b) are at least partially surrounded by the protective tube (11).

3. Sensing assembly (1) as claimed in claim 2,
wherein the fitting (13a, 13b) and the measuring insert (6) are positioned within an inner cavity of the protective tube (11) such, that at least one intermediate chamber (12) is formed.

4. Sensing assembly (1) as claimed in claim 3,
comprising gas conduit means (3) including at least a gas-inlet (4) and a gas-outlet (5) both at least connected to the intermediate chamber (12).

5. Sensing assembly (1) as claimed in at least one of the preceding claims,
wherein the measuring insert (6) has a rod like form in which at least one sensor element (7a,7b,8), preferably a temperature probe, e.g. a thermocouple or a resistance element, preferably comprising at least one connection cable or wire (7a,7b), is arranged, preferably at the tip of the measuring insert (6).

6. Sensing assembly (1), as claimed in at least one of the preceding claims,
wherein the measuring insert (6) has a metallic outer sheath (9), which is filled with an insulating material, and in which the sensor element (7a,7b,8), and preferably the at least one connection cable or wire (7a,7b)) are embedded.

7. Sensing assembly (1), as claimed in at least one of the preceding claims,
wherein the connecting sleeve (14) comprises a process connection (15).

8. Sensing assembly (1), as claimed in at least one of the preceding claims,
wherein the protective tube (11) and/or the connecting sleeve (14) are embodied to receive the brazing component (17).

9. Method for fabricating a sensing assembly (1) according to at least one of the preceding claims, comprising the steps of
arranging the protective tube (11), and the connecting sleeve (15) such, that the connecting sleeve (15) at least surrounds the protective tube (11) in an area facing away from the medium, and
joining the protective tube (11) and the connecting sleeve (14) at least in a predefined area (A) by means of a braze produced via a brazing component (17) arranged in the predefined area (17),
wherein the brazing component (17) initially has the form of a solid body, namely a ring composed by an active brazing alloy comprising titanium, copper and silver.

10. Method according to claim 9,
wherein the braze is produced under vacuum conditions, preferably at a pressure lower than 10⁻⁵ bar.

11. Method according to at least one of the claims 9 or 10,
wherein for producing the braze, the protective tube (11), the connecting sleeve (14), and the brazing component (17) are heated up to a melting point of a brazing alloy contained in the brazing component (17) for more than one minute, preferably for a time interval from about 1-15 minutes.

12. Method according to at least one of the claims 9 to 11,
wherein after producing the braze, the protective tube (11), the connecting sleeve (15), and the brazing component (17) are cooled down for a first predetermined time interval under vacuum conditions, and subsequently for a second predetermined time interval in an inert gas atmosphere.

## Patentansprüche

1. Sensoranordnung (1) für die Erfassung einer Prozessvariablen eines Mediums, vorzugsweise für die Erfassung einer Temperatur, Folgendes umfassend:
- ein Messeinsatz (6) für die Erfassung der Prozessvariablen, vorzugsweise für die Erfassung einer Temperatur,
- ein mindestens teilweise den Messeinsatz (11) umgebendes Schutzrohr (11), welches Schutzrohr (11) mindestens teilweise aus einem keramischen Material besteht und welches Schutzrohr (11) dergestalt ausgeführt ist, dass mindestens der Messeinsatz (6) vor mindestens einer Prozessbedingung geschützt wird, und
- eine Verbindungshülse (14), welche Verbindungshülse (14) mindestens teilweise aus einem metallenen Material besteht und welche Verbindungshülse (14) mindestens das Schutzrohr (11) in einem dem Medium abgewandten Bereich umgibt,
- wobei das Schutzrohr (11) und die Verbindungshülse (14) in mindestens einem vordefinierten Bereich (A) mithilfe einer durch eine in dem vordefinierten Bereich (A) angeordnete Lötkomponente (17) hergestellten Hartlötung verbunden sind,
**dadurch gekennzeichnet, dass**
- das Schutzrohr (11) aus Aluminium, Siliciumcarbid oder Siliciumnitrid besteht, und
- die Lötkomponente (17) ursprünglich die Form eines festen Körpers, nämlich eines Rings, der aus einem aktiven Hartlot, das Titan, Kupfer und Silber umfasst, besteht, aufweist.

2. Sensoranordnung (1) nach Anspruch 1,
umfassend mindestens ein, vorzugsweise vorgeformtes, Fitting (13a,13b), das mindestsens teilweise den Messeinsatz (6) umgibt, wobei der Messeinsatz (6) und das vorgeformte Fitting (13a, 13b) mindestens teilweise vom Schutzrohr (11) umgeben sind.

3. Sensoranordnung (1) nach Anspruch 2,
wobei das Fitting (13a, 13b) und der Messeinsatz (6) innerhalb einer inneren Kavität des Schutzrohrs (11) dergestalt positioniert sind, dass mindestens eine Zwischenkammer (12) gebildet wird.

4. Sensoranordnung (1) nach Anspruch 3,
umfassend Gasleitungsmittel (3), einschließlich mindestens eines Gaseinlasses (4) und eines Gasauslasses (5), die beide mindestens mit der Zwischenkammer (12) verbunden sind.

5. Sensoranordnung (1) nach mindestens einem der vorhergehenden Ansprüche,
wobei der Messeinsatz (6) eine stangenartige Form aufweist, in dem mindestens ein Sensorelement (7a,7b,8), vorzugsweise eine Temperatursonde, z. B. ein Thermoelement oder ein Widerstandselement, das vorzugsweise mindestens ein Anschlusskabel oder einen Anschlussdraht (7a,7b) umfasst, angeordnet ist, vorzugsweise an der Spitze des Messeinsatzes (6).

6. Sensoranordnung (1) nach mindestens einem der vorhergehenden Ansprüche,
wobei der Messeinsatz (6) eine metallene äußere Hülle (9) aufweist, die mit einem isolierenden Material gefüllt ist und in welcher das Sensorelement (7a,7b,8), und vorzugsweise das mindestens eine Anschlusskabel oder der mindestens eine Anschlussdraht (7a,7b) eingebettet sind.

7. Sensoranordnung (1) nach mindestens einem der vorherigen Ansprüche,
wobei die Verbindungshülse (14) einen Prozessanschluss (15) umfasst.

8. Sensoranordnung (1) nach mindestens einem der vorhergehenden Ansprüche,
wobei das Schutzrohr (11) und/oder die Verbindungshülse (14) dergestalt ausgeführt sind, dass die Lötkomponente (17) aufgenommen wird.

9. Verfahren für die Herstellung einer Sensoranordnung (1) nach mindestens einem der vorhergehenden Ansprüche, umfassend die folgenden Schritte:
Anordnung des Schutzrohrs (11) und der Verbindungshülse (15) dergestalt, dass die Verbindungshülse (15) mindestens das Schutzrohr (11) in einem vom Medium abgewandten Bereich umgibt, und
Verbindung des Schutzrohrs (11) und der Verbindungshülse (14) mindestens in einem vordefinierten Bereich (A) mithilfe einer über eine in dem vordefinierten Bereich (A) angeordnete Lötkomponente (17) hergestellten Hartlötung,
wobei die Lötkomponente (17) ursprünglich die Form eines festen Körpers, nämlich eines Rings, der aus einem aktiven Hartlot besteht, das Titan, Kupfer und Silber umfasst, aufweist.

10. Verfahren nach Anspruch 9,
wobei die Hartlötung unter Vakuumbedingungen hergestellt wird, vorzugsweise bei einem Druck von unter 10⁻⁵ bar.

11. Verfahren nach mindestens einem der Ansprüche 9 oder 10,
wobei für die Herstellung der Hartlötung das Schutzrohr (11), die Verbindungshülse (14) und die Lötkomponente (17) über einen Zeitraum von mehr als einer Minute, vorzugsweise über einen Zeitraum von ungefähr 1-15 Minuten, bis zu einem Schmelzpunkt eines in der Lötkomponente (17) enthaltenen Hartlots erwärmt wird.

12. Verfahren nach mindestens einem der Ansprüche 9 bis 11,
wobei nach der Herstellung der Hartlötung das Schutzrohr (11), die Verbindungshülse (15) und die Lötkomponente (17) über einen ersten vorbestimmten Zeitraum unter Vakuumbedingungen und anschließend über einen zweiten vorgegebenen Zeitraum in einer inerten Gasatmosphäre abgekühlt werden.

## Revendications

1. Ensemble de mesure (1) destiné à la mesure d'une variable de process d'un produit, de préférence pour la mesure d'une température, lequel ensemble comprend
- un insert de mesure (6) destiné à la mesure de la variable de process, de préférence pour la mesure d'une température,
- un tube de protection (11) enveloppant au moins partiellement l'insert de mesure (11), lequel tube de protection (11) est au moins partiellement constitué d'un matériau céramique et lequel tube de protection (11) est conçu pour protéger au moins l'insert de mesure (6) contre au moins une condition du process, et
- un manchon de raccordement (14), lequel manchon de raccordement (14) est constitué au moins partiellement d'un matériau métallique, et lequel manchon de raccordement (14) entoure au moins partiellement le tube de protection (11) dans une zone éloignée du produit,
- le tube de protection (11) et le manchon de raccordement (14) étant assemblés au moins dans une zone prédéfinie (A) au moyen d'une brasure produite via un composant de brasage (17) disposé dans la zone prédéfinie (A),
**caractérise en ce que**
- le tube de protection (11) est composé d'alumine, de carbure de silicium ou de nitrure de silicium, et
- le composant de brasage (17) présente initialement la forme d'un corps solide, notamment une bague, constitué d'un alliage de brasage actif comprenant du titane, du cuivre et de l'argent.

2. Ensemble de mesure (1) selon la revendication 1,
comprenant au moins un raccord (13a, 13b), de préférence préformé, entourant au moins partiellement l'insert de mesure (6), l'insert de mesure (6) et le raccord préformé (13a, 13b) étant au moins partiellement entourés par le tube de protection (11).

3. Ensemble de mesure (1) selon la revendication 2,
pour lequel le raccord (13a, 13b) et l'insert de mesure (6) sont positionnés dans une cavité intérieure du tube de protection (11) de telle sorte à former au moins une chambre (12) intermédiaire.

4. Ensemble de mesure (1) selon la revendication 3,
comprenant des moyens (3) de conduite du gaz incluant au moins une entrée de gaz (4) et une sortie de gaz (5) au moins raccordées à la chambre intermédiaire (12).

5. Ensemble de mesure (1) selon au moins l'une des revendications précédentes, pour lequel l'insert de mesure (6) présente une forme de tige dans laquelle au moins un élément capteur (7a, 7b, 8), de préférence une sonde de température, p. ex. un thermocouple ou un élément résistif, de préférence comprenant au moins un câble ou un fil de raccordement (7a, 7b), est disposé à l'extrémité de l'insert de mesure (6).

6. Ensemble de mesure (1) selon au moins l'une des revendications précédentes, pour lequel l'insert de mesure (6) comporte une gaine extérieure métallique (9), laquelle gaine est remplie d'un matériau isolant, et dans laquelle l'élément capteur (7a, 7b, 8) et de préférence l'au moins un câble ou fil de raccordement (7a, 7b) sont intégrés.

7. Ensemble de mesure (1) selon au moins l'une des revendications précédentes, pour lequel le manchon de raccordement (14) comprend un raccord process (15).

8. Ensemble de mesure (1) selon au moins l'une des revendications précédentes, pour lequel le tube de protection (11) et/ou le manchon de raccordement (14) sont conçus pour recevoir le composant de brasage (17).

9. Méthode pour la fabrication d'un ensemble de mesure selon au moins l'une des revendications précédentes, laquelle méthode comprend les étapes de disposition du tube de protection (11) et du manchon de raccordement (15) de telle sorte que le manchon de raccordement (15) entoure au moins le tube de protection (11) dans une zone éloignée du produit, et
d'assemblage du tube de protection (11) et du manchon de raccordement (14) au moins dans une zone prédéfinie (A) au moyen d'une brasure réalisée à l'aide d'un composant de brasage (17) disposé dans la zone prédéfinie (17),
le composant de brasage (17) présentant initialement la forme d'un corps solide, notamment une bague composée d'un alliage de brasage actif comprenant du titane, du cuivre et de l'argent.

10. Méthode selon la revendication 9,
pour laquelle la brasure est réalisée sous vide, de préférence à une pression inférieure à 10⁻⁵ bar.

11. Méthode selon au moins l'une des revendications 9 ou 10,
pour laquelle, pour la réalisation de la brasure, le tube de protection (11), le manchon de raccordement (14) et le composant de brasage (17) sont chauffés jusqu'au point de fusion d'un alliage de brasage contenu dans le composant de brasage (17) pendant plus d'une minute, de préférence pendant une période de temps d'env. 1 à 15 minutes.

12. Méthode selon au moins l'une des revendications 9 ou 11,
pour laquelle après réalisation de la brasure, le tube de protection (11), le manchon de raccordement (15) et le composant de brasage (17) sont refroidis sous vide pendant une première période de temps prédéfinie, puis sous une atmosphère de gaz inerte pendant une deuxième période de temps prédéfinie.
